# EUROPEAN PATENT APPLICATION

(11) **EP 0 847 033 A2**
(43) Date of publication of application: **10.06.1998**
(21) Application number: 97309660.5
(22) Date of filing: 01.12.1997
(51) Int. Cl.: G08C 17/00, H04B 3/54

(54) **Remote control device**

(30) Priority: 06.12.1996 GB 9625370
(71) Applicant: Henderson, Ronald Mark, Pontypool, Gwent, NP4 7HZ (GB)
(72) Inventor: Henderson, Ronald Mark, Pontypool, Gwent, NP4 7HZ (GB)
(74) Representative: Evans, Huw David Duncan

(57) **Abstract**

A home control device comprises terminals for connecting to a constant mains supply cable 22 and terminals for connecting to a cable 13 of a pendant light 14. The device comprises a plurality of receivers for respectively receiving audible and infra-red remote signals for controlling the light 14 and for controlling other appliances remotely connected to the device. The remote appliances are controlled by applying data signals to the mains cable 22 and/or to a radio carrier. The device further comprises input transducers 27,30 for sensing parameters such as sound, movement, temperature, smoke or humidity etc. within the room and means for activating alarms and other appliances e.g. 28,29 in response to predetermined signals from the transducers 27,30. The control device can conveniently be fitted in place of a conventional ceiling rose, which has the advantage that there is a readily available constant mains supply. The device is located at the point of the lighting fixture and thus the need for complicated and extensive wiring between the control device and the light 14 is avoided. Another advantage of mounting the control device to the ceiling is that it is located in a position which is high up in the room, where it is therefore able to receive remote control signals from almost any location within the room.

## Description

This invention relates to a control device and more particularly to a control device for remotely controlling electrical appliances.

It is well known to provide control devices for remotely controlling lights and other electrically operated appliances. A disadvantage of such known devices is that they are difficult to install, and often the main control unit is located in a position where it is relatively inconvenient to use.

I have now devised a control device which alleviates the above-mentioned problems.

In accordance with this invention, there is a provided a control device comprising a housing for fitting to a ceiling, and a control unit mounted within the housing, the control unit comprising terminals for connecting to a constant mains supply, terminals for connecting to a lighting fixture, a receiver for receiving remote control signals and means for applying mains to the lighting fixture terminals and/or for generating data signals for controlling remote appliances, in response to said remote control signals.

In use, the control device can conveniently be fitted in place of a conventional ceiling rose, which has the advantage that there is a readily available constant mains supply. The device is located at the point of the lighting fixture, and thus the need for complicated and extensive wiring between the control device and the light is avoided. Another advantage of mounting the control device to the ceiling is that it is located in a position which is high up in the room, where it is therefore able to receive remote control signals from almost any location within the room.

In one embodiment, the control unit is arranged to apply said control data signals to the mains supply, and thus the device is able to remotely control appliances that are connected to the mains supply via the mains wiring, thereby avoiding the need for complicated control wires between the device and the remote appliances.

Preferably the control unit comprises means for detecting control data signals on the mains supply terminals, so that the device can receive control data from other devices.

In an alternative embodiment, the control unit comprises a radio transmitter which is arranged to transmit radio control data signals to remote appliances.

Preferably the control unit comprises a radio receiver and means for detecting radio control data signals received by the receiver, so that the device can receive control data from other devices.

Preferably the remote control signal detecting means is arranged to detect infra-red remote control signals. The remote control signal detecting means may also be arranged to detect audible control signals, preferably by means of a speech recognition circuit.

Preferably the remote control signal detecting means comprises a plurality of detecting transducers which are directed in different outwardly-facing directions from the housing.

Preferably the control unit comprises one or more transducers for sensing parameters such as sound, movement, temperature, smoke or humidity etc. within the room. It will be appreciated that the position of the device on the ceiling is ideal for sensing parameters at almost any location within the room.

Preferably the control unit comprises a motion detector transducer for detecting movement within the room. The control unit may be arranged to trigger an alarm and/or apply power to the lighting fixture in the event that movement is detected within the room.

Preferably the control unit comprises an audible alarm which is arranged to activate when movement is detected, or when appropriate control data signals are received from another device via the mains supply.

An embodiment of this invention will now be described by way of example only and with reference to the accompanying drawings, in which:
Figure 1 is a perspective view of a home control device in accordance with this invention;
Figure 2 is a block diagram of a control unit of the device of Figure 1; and
Figure 3 is a diagram of a typical message control data generated by the device of Figure 1.

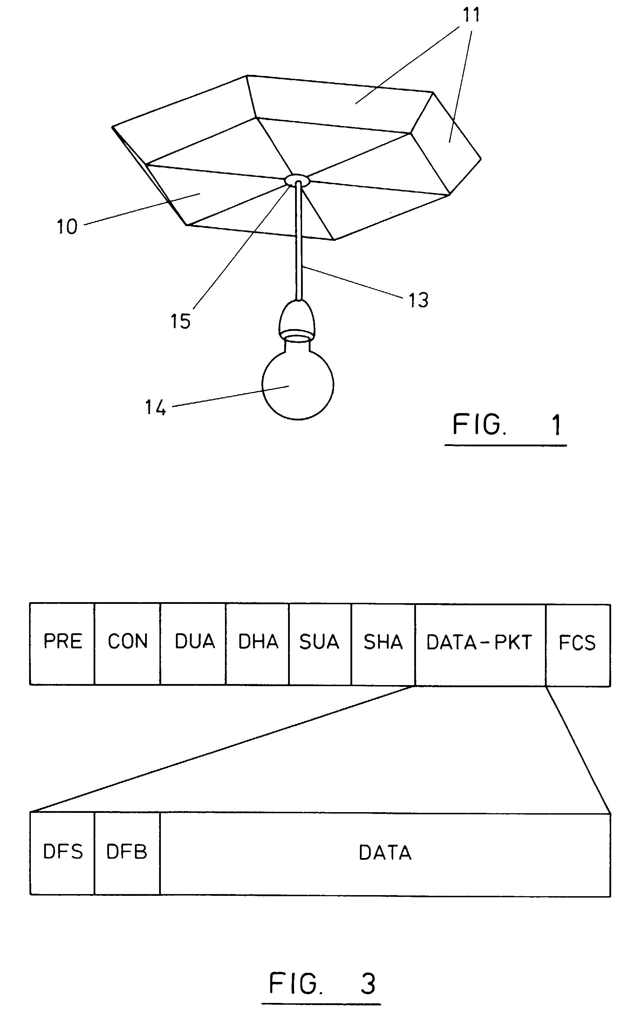

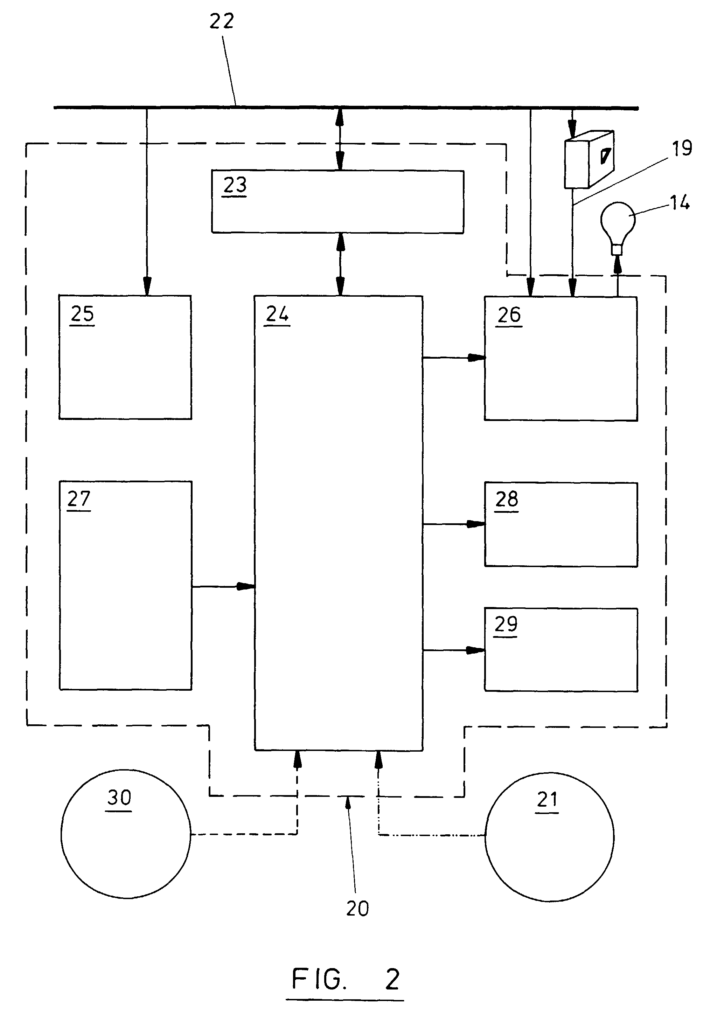

Referring to Figure 1 of the drawings, there is shown a home control device for fitting to a ceiling in place of a conventional ceiling lighting rose. The device comprises a housing 10 formed of flame retardant plastics material, the housing comprising a hexagonal base for fitting to the ceiling and a removable cover of a corresponding shape.

The cover comprises a flat hexagonal underside and six side walls 11 around its periphery. The side walls 11 are inclined outwardly and upwardly from the base by an angle of about 45°, so that they face down into the room. One or more of the side walls may comprise a grille, opening or window so to provide access to transducers mounted inside the housing. Some transducers (not shown) may be mounted directly on the side walls 11.

A supply cable 13 to a pendant light 14 extends through a central aperture 15 in the underside of the cover. The housing encloses a control unit of the device, which unit comprises a printed circuit board mounted to the base of the housing and terminals for connecting to the mains supply cables running through the ceiling and for connecting to the supply cable 13 of the pendant light 14.

Referring to Figure 2 of the drawings, the control unit 20 comprises a central processing unit (CPU) 24 which incorporates a read-only memory (ROM), a random access memory (RAM) and associated circuitry for address decoding, control, time-keeping and interfacing together with the software which controls the operation of the device.

The CPU 24 is connected to the live and neutral conductors of the mains supply cable 22 via an interface circuit 23, which encodes control data from the CPU into a format which can be transmitted over the mains wiring. The interface circuit 23 similarly decodes control data from the mains wiring and feeds it to the CPU 24.

The control circuit 20 also comprises a power supply unit 25 which is connected to the mains wiring 22, and which provides low voltage power to the components of the control unit 20. The power supply unit 25 may also comprise a rechargeable battery which provides power to the control unit 20 in the event of an interruption to the mains supply.

The pendant light 14 is connected to a lighting control circuit 26, which is connected to the mains wiring 22 and to the CPU 24. The lighting control circuit 26 receives control signals from the CPU 24 in order to supply power to the pendant light 13. The lighting control circuit 26 preferably comprises a dimmer circuit for varying the brightness of the light 13. The lighting control circuit 26 is also connected to the switched live conductor 19 of the mains wiring 22, so that the light can be controlled by a conventional wall switch.

A plurality of integral input transducers e.g. 27 are connected to the CPU 24. These may include transducers for sensing temperature and humidity, movement sensors such as passive infra-red sensors, smoke and gas sensors, and optical and acoustic sensors. The optical and acoustic sensors may be connected via image and voice recognition circuits respectively. The sensors e.g. 27 may be mounted inside the housing or on the side walls 11 of the housing, as hereinbefore described. A plurality of remote sensors e.g. 30 may also be connected to the unit 20 by wires or by a wireless remote link.

The CPU 24 is also connected to a plurality of output transducers e.g. 28, 29. These may include audible and visual alarm warning devices, low-voltage safety lighting, loudspeakers, visual display devices and driver circuits for connecting to remote transducers.

The control device receives some control signals via the mains wiring 22 from other such devices. However, the device also receives remote control signals from remote controllers 21 within the room. These remote controllers 21 may transmit infra-red, ultra-sonic or radio control signals to remote control signal receivers of the device, which in the former two cases are preferably mounted on the side walls 11 of the housing where they are inclined downwardly into the room.

Referring to Figure 3 of the drawings, each control device communicates with the other control devices by sending control data signals over the mains wiring as hereinbefore described. The data is transmitted in the form of message which comprise a plurality of data words. The first two words [PRE], comprising two bytes, is a preamble which allows time for the interface circuit 23 of the receiving device time to wake up to the fact that the data is being received. The next word [CON] comprising two bytes, positively identifies the word as being a control data signal and not some sort of spurious signal.

A system comprising a plurality of control devices in accordance with this invention may be divided into a plurality of zones, which correspond with say different residences/buildings in a neighbourhood. The control devices of each zone preferably have a unique address from other devices in that zone and each zone preferably has a different address. Thus, the next two words [DUA] and [DHA] respectively comprise two bytes which give the address of the destination device or devices and two bytes which gives the zone address of the destination device or devices. Similarly, the next two words [SUA] and [SHA] each comprises two bytes which respectively give the address and the zone address of the sending device. One or more devices may be addressed simultaneously, or all devices within the same zone may be addressed.

The actual control data is transmitted in a plurality of words [DATA-PKT] following the address words. These data words comprise an initial word [DFS], which indicates the number of the data words present in the message, one word [DFB] which indicates the format of the data, and then 0-30 words [DATA] of control data. The final word [FCS] in the data message is a word to verify that the data is correctly received.

In use, the control device can be configured to perform a variety of functions. The most basic function is the remote control of the pendant light which can be switched ON or OFF using the conventional wall switch or by using the remote control handset 13, which is able to adjust the brightness of the light. Other mains electrical appliances can also be controlled from the handset 13, which sends signals to the control device that then sends corresponding control data along the mains wiring to the other appliances. These remote appliances are connected to the mains via respective interface which detect the control signals and perform switching.

The control device comprises a clock which can provide an audible/visual indication of the time. Alternatively, the clock can be used to remotely activate or deactivate lights and other appliances at preset times. The temperature and humidity sensors may remotely control heating and ventilating appliances.

The control device may be configured so that its associated pendant light is energised at a preset darkness level and/or when there is movement detected in the room. The light may be arranged to extinguish when there is no movement detected, thereby saving energy. The control device may be arranged to learn a pattern of movement in the room and replay that movement at a later time, so that the light is energised and de-energised for security purposes when the house is unoccupied.

The movement detector transducer may also be arranged to enable the device to operate as an intruder alarm. In the event that movement is detected, the device may emit an audible alarm signal and send control data via the mains to other devices in the same zone, so that they also emit alarm signals. The device may also energise, de-energise or flash their respective pendant lights in the event of an alarm.

The device can be configured to send some control data signals to other zones, so that neighbours etc. can be alerted that there is a break-in. The neighbours are preferably able to reset the alarm from within their own home by inputting a code number into the remote handset.

Old or infirm people may also use the device to summon assistance from their neighbours by pressing a button on their handset, so that an alarm signal is sent to a neighbour's house via the mains wiring.

The control device is preferably arranged to trigger an audible alarm signal when smoke is detected. Preferably, the device is arranged to illuminate the pendant light in the event that smoke is detected. Also, control data signals may be sent to other zones, for example to alert neighbours. In the event of a power cut, the device may be able to illuminate its low-voltage light by means of the rechargeable battery.

The control device may be able to perform voice recognition, so that appliance may be controlled e.g. by saying "lights on". Alternatively, the microphone on the device may be used to monitor for noises in another room, for example where a child is sleeping.

It will be appreciated that the control functions of the device are almost limitless, and the device can be configured to perform the required function simply by inputting codes into the remote handset 13.b

In an alternative embodiment the devices may communicate with each other by sending radio control data signals only, or by a combination of both.

## Claims

**1)** A control device comprising a housing for fitting to a ceiling, and a control unit mounted within the housing, the control unit comprising terminals for connecting to a constant mains supply, terminals for connecting to a lighting fixture, a receiver for receiving remote control signals and means for applying mains to the lighting fixture terminals and/or for generating data signals for controlling remote appliances, in response to said remote control signals.

**2)** A control device as claimed in claim 1, in which the control unit is arranged to apply said control data signals to the mains supply, the device being able to remotely control said appliances via the mains wiring.

**3)** A control device as claimed in claim 3, in which the control unit comprises means for detecting control data signals on the mains supply terminals.

**3)** A control device as claimed in claim 1, in which the control unit comprises a radio transmitter arranged to transmit radio control data signals to said remote appliances.

**4)** A control device as claimed in claim 3, in which the control unit comprises a radio receiver and means for detecting radio control data signals received by the receiver.

**5)** A control device as claimed in any preceding claim, in which the remote control signal detecting means is arranged to detect infra-red remote control signals.

**6)** A control device as claimed in any preceding claim, in which the remote control signal detecting means is arranged to detect audible control signals.

**7)** A control device as claimed in claim 6, in which the remote control signal detecting means comprises a speech recognition circuit.

**8)** A control device as claimed in any preceding claim, in which the remote control signal detecting means comprises a plurality of detecting transducers which are directed in different outwardly-facing directions from the housing.

**9)** A control device as claimed in any preceding claim, in which the control unit comprises one or more transducers for sensing external parameters.

**10)** A control device as claimed in claim 9, in which the control unit comprises a motion detector transducer for detecting movement within the room.

**11)** A control device as claimed in claim 10, in which the control unit is arranged to trigger an alarm, in the event that movement is detected.

**12)** A control device as claimed in claims 10 or 11, in which the control unit is arranged to apply power to the lighting fixture, in the event that movement is detected.

**13)** A control device as claimed in any of claims 10 to 12, in which the control unit comprises an audible alarm which is arranged to activate when movement is detected.

**14)** A control device as claimed in any of claims 10 to 13 as appended to claim 3, in which the control unit comprises an audible alarm which is arranged to activate when appropriate control data signals are received from another device via the mains supply.
